Europäisches Patentamt

(19) European Patent Office

Office européen des brevets

(11) **EP 1 702 737 A1**

(12) **EUROPÄISCHE PATENTANMELDUNG**

| | |
|---|---|
| (43) Veröffentlichungstag:<br>**20.09.2006 Patentblatt 2006/38** | (51) Int Cl.:<br>**B29B 7/76** (2006.01)     **B01F 15/04** (2006.01)<br>**B29C 67/24** (2006.01) |
| (21) Anmeldenummer: **06004518.4** | |
| (22) Anmeldetag: **06.03.2006** | |

| | |
|---|---|
| (84) Benannte Vertragsstaaten:<br>**AT BE BG CH CY CZ DE DK EE ES FI FR GB GR HU IE IS IT LI LT LU LV MC NL PL PT RO SE SI SK TR**<br>Benannte Erstreckungsstaaten:<br>**AL BA HR MK YU** | (72) Erfinder:<br>• **Duschanek, Helmut**<br>  **53639 Königswinter (DE)**<br>• **Salah, Gerd**<br>  **53773 Hennef (DE)**<br>• **Wirth, Jürgen**<br>  **51147 Köln (DE)** |
| (30) Priorität: **19.03.2005 DE 102005012795** | (74) Vertreter: **Weismantel, Lothar**<br>**Bayer MaterialScience AG,**<br>**Law & Patents**<br>**Patents and Licensing**<br>**51368 Leverkusen (DE)** |
| (71) Anmelder: **Hennecke GmbH**<br>**51379 Leverkusen (DE)** | |

(54) **Verfahren und Vorrichtung zur Herstellung von Polyurethan-Formteilen**

(57) Die Erfindung betrifft eine Vorrichtung zur Herstellung von Formteilen aus Reaktivkunststoffen umfassend Vorratsbehälter (1, 2) für die Reaktivkomponenten, einen Mischer (9) für die Vermischung der Reaktivkomponenten, Dosieraggregate (7, 8) und Leitungen (5, 6) für die Dosierung der Reaktivkomponenten aus den Vorratsbehältern (1, 2) in den Mischer (9), dadurch gekennzeichnet, dass mindestens eines der Dosieraggregate ein Kolbendosieraggregat (7) ist, welches einen Dosierkolben (14) und ein dem Dosierkolben zugeordnetes Spindelaggregat mit einer Spindel (15) und einer Spindelmutter (16) enthält, wobei die Spindelmutter von einem Torquemotor (17) angetrieben wird.

Fig. 2

EP 1 702 737 A1

**Beschreibung**

Die Erfindung betrifft ein Verfahren und eine Vorrichtung zur Herstellung von Formteilen aus Reaktivkunststoffen, insbesondere aus Polyurethanen, bei dem mindestens eine der Reaktivkomponenten mit mindestens einem Kolbendosieraggregat dosiert wird, das ein von einem Torquemotor angetriebenes Spindelaggregat enthält.

Bei der Herstellung von Formteilen aus Reaktivkunststoff, z.B. aus Polyurethan, ist es gebräuchlich, den Reaktivkomponenten auch Füllstoffe beizumischen. Das geschieht in der Hauptsache, um die physikalischen Eigenschaften der Formteile zu verbessern. So wird z.B. bei Formteilen, die der Schallisolierung dienen, Schwerspat beigemischt. Stoßfängern an Autos werden gemahlene Glasfasern oder gemahlene Mineralfasern beigegeben, um den Wärmeausdehnungskoeffizienten dem von Metallen anzupassen. Mehr und mehr werden auch Naturfasern wie z.B. Jute oder Hanf verwendet, um z.B. die Steifigkeit von großflächigen Formteilen zu erhöhen.

In der Regel werden die Füllstoffe bei der Herstellung von Formteilen aus Polyurethanen der Polyolkomponente zugegeben, weil diese im Normalfall höherviskos ist, so dass ein Sedimentieren der Füllstoffe unterbleibt und dadurch die Homogenisierung erleichtert wird.

Die Verwendung von Füllstoffen hat zu der Entwicklung von so genannten Kolbendosieraggregaten geführt. Diese haben auf Grund ihrer gegenüber schnell laufenden Kolbenpumpen relativ niedrigen Kolbengeschwindigkeit wesentlich reduzierte Verschleißprobleme. Denn schnell laufende Kolbenpumpen sind auf Grund der Abrasivität der meisten Füllstoffe für die Verarbeitung von gefüllten Rohstoffsystemen nicht geeignet, weil solche Pumpen in kürzester Zeit verschleißen.

Ein wesentlicher Aspekt bei der Entwicklung von Kolbendosieraggregaten war und ist die Antriebstechnik.

Da es bei der Verwendung von Füllstoffen selbst bei bester Homogenisierung nicht vermeidbar ist, dass sich hin und wieder Agglomerate bilden, die bei der gebräuchlichen Hochdruckvermischung in den Düsen zu Druckschwankungen führen, ist es unbedingt erforderlich, so genannte drucksteife Antriebsorgane einzusetzen.

Denn wenn auf Grund eines Druckanstiegs die Geschwindigkeit eines Dosierkolbens absinken würde, würde sich auch die entsprechende Austragsmenge reduzieren und es käme zu einem falschen Mischungsverhältnis der Reaktivkomponenten, des Weiteren auch zu einem Abfall des resultierenden Formteilgewichts und damit der spezifischen Dichte des Formteils. Das alles hätte mindere Qualität des Formteils oder gar Ausschuss zu Folge.

Es ist also unbedingt erforderlich, Antriebssysteme den Kolbendosieraggregaten zuzuordnen, die auch bei Druckschwankungen eine völlig konstante Kolbendosiergeschwindigkeit gewährleisten.

Erste negative Erfahrungen wurden in diesem Zusammenhang gesammelt, als man in den Anfängen der Entwicklung von Kolbendosieraggregaten versuchte, diese mit einfachen Hydraulikantrieben auszustatten. Die Druckabhängigkeit der verwendeten Hydraulikpumpen war bald erkannt und man versuchte dann, die Hydrauliksysteme diesbezüglich zu verbessern.

Ein besonders erwähnenswertes Beispiel in diesem Zusammenhang ist die Entwicklung des bekannten Rimdomaten (siehe Prospekt 32 der Fa. Hennecke GmbH in Sankt Augustin-Birlinghoven). Grundlage hierfür war die in EP-A-0 003 563 beschriebene Linearverstärker-Technologie. Dabei wird jedem Dosierkolben ein spezieller Hydraulikkolben, ein so genannter Linearverstärker mit Schrittmotor zugeordnet, wobei eine von einem Frequenzgenerator vorgegebene Impulsfolge in eine Stellbewegung des den Dosierkolben antreibenden Hydaulikkolbens umgesetzt wird.

Die elektro-hydraulische Kolbenwegsteuerung der Linearverstärker-Technologie liefert zwar drucksteife Antriebssysteme, ist aber aufwändig und kompliziert und damit auch teuer.

Es bestand also der Bedarf, ein Antriebssystem zu finden, welches drucksteif, aber auch einfach und damit preisgünstig ist.

Die Aufgabe der vorliegenden Erfindung besteht darin, ein einfaches und wirtschaftliches Verfahren und eine entsprechende Vorrichtung für die Herstellung von Formteilen aus Reaktivkunststoffen, insbesondere aus Polyurethanen, zur Verfügung zu stellen, das auch bei Einsatz von füllstoffhaltigen Reaktivkomponenten eine exakte Dosierung gewährleistet.

Die Erfindung betrifft eine Vorrichtung zur Herstellung von Formteilen aus Reaktivkunststoffen umfassend Vorratsbehälter für die Reaktivkomponenten, einen Mischer für die Vermischung der Reaktivkomponenten, Dosieraggregate und Leitungen für die Dosierung der Reaktivkomponenten aus den Vorratsbehältern in den Mischer, dadurch gekennzeichnet, dass mindestens eines der Dosieraggregate ein Kolbendosieraggregat ist, welches einen Dosierkolben und ein dem Dosierkolben zugeordnetes Spindelaggregat mit einer Spindel und einer Spindelmutter enthält, wobei die Spindelmutter von einem Torquemotor angetrieben wird.

Die Erfindung betrifft auch ein Verfahren zur Herstellung von Formteilen aus Reaktivkunststoffen in der erfindungsgemäßen Vorrichtung, bei dem die Reaktivkomponenten in den Mischer dosiert und dort zu einem Reaktivgemisch vermischt werden, und das Reaktivgemisch anschließend aus dem Mischer in eine Form oder auf ein Substrat ausgetragen wird und dort aushärtet.

Bevorzugt werden nach dem erfindungsgemäßen Verfahren und in der erfindungsgemäßen Vorrichtung Polyurethan-Formkörper aus mindestens einer Isocyanatkomponente und mindestens einer Polyolkomponente hergestellt.

Weiterhin bevorzugt ist wenigstens eine der Reaktivkomponenten mit Füllstoffen beladen. Bevorzugt Füllstoffe sind dabei Glasfasern, Mineralfasern, Mineralpulver wie Bariumsulfat, pulverisierter Kunststoff wie Melaminharz und feste Flammschutzmittel. Weiterhin bevorzugt sind die für die Dosierung der füllstoffhaltigen Reaktivkomponenten eingesetzten Dosieraggregate Kolbendosieraggregate, welche einen Dosierkolben und ein dem Dosierkolben zugeordnetes Spindelaggregat mit einer Spindel und einer Spindelmutter enthalten, wobei die Spindelmutter von einem Torquemotor angetrieben wird. Es können aber auch für alle Komponenten Kolbendosieraggregate eingesetzt werden.

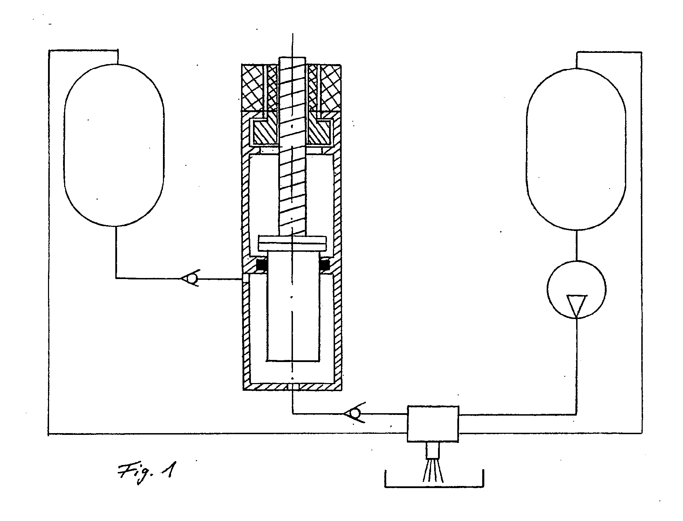

Figur 1 zeigt beispielhaft die Lösung für die beschriebene Aufgabenstellung, nämlich das Schema einer Vorrichtung zum Verarbeiten von üblicherweise flüssigen oder pastösen Reaktivkomponenten, wobei die Reaktivkomponenten von Vorratstanks mittels Dosieraggregaten über Saug- sowie Druckleitungen in einem exakten Mischungsverhältnis zu einem Mischer gefördert und dort vermischt werden, und wobei anschließend das Reaktivgemisch in eine Form eingetragen bzw. auf ein Substrat aufgetragen wird. Dabei ist mindestens eines der Dosieraggregate ein Kolbendosieraggregat und enthält einen Dosierkolben und ein dem Dosierkolben zugeordnetes Spindelaggregat, d.h. eine Spindel mit Spindelmutter, wobei diese von eine Torquemotor angetrieben wird.

Das Neue an der erfindungsgemäßen Vorrichtung ist insbesondere die Verwendung eines Torque-Antriebs für die Bewegung der Spindelmutter und damit der Spindel und des Dosierkolbens; denn Torque-Antriebe sind in der Kolbendosiertechnik bisher nicht angewendet worden. Vorwiegend werden Torquemotoren als Radmotoren für spezielle Fahrzeuge eingesetzt. In diesen Anwendungen sind die Anforderungen an eine lastenunabhängige, gleichförmige Bewegung vergleichsweise gering verglichen mit den Anforderungen in der Dosiertechnik. Insbesondere hochdynamische Lastwechsel in Zeitspannen von 0,01 bis 1 Sekunde sind bei Fahrzeugantrieben völlig unbedeutend.

Bei Versuchen mit durch Torquemotoren angetriebenen Kolbendosieraggregaten wurde jetzt nämlich überraschend eine sehr gute Drucksteifigkeit festgestellt, d.h. eine konstante Dosierkolbengeschwindigkeit selbst bei dynamischen Druckschwankungen in der genannten Zeitgrößenordnung von 0,01 bis 1 Sekunde. Damit wurden technische Vorurteile bezüglich eines zu befürchtenden Drehzahleinbruchs des Torquemotors bei Lastschwankungen überwunden.

Torquemotoren sind Direktantriebe, d.h. es werden weder Getriebe noch Zahnriemen benötigt. Somit ist die Verwendung von Torquemotoren konstruktiv einfach und dadurch auch wirtschaftlich und preiswert.

Zwischen Mischkopf und Vorratstanks können auch Rücklaufleitungen angeordnet sein. Damit ist es möglich, die Reaktivkomponenten zur Konditionierung vor Produktionsbeginn, in Pausenzeiten sowie vor jedem Schuss rezirkulieren zu lassen.

Eine Vorrichtung ohne Rücklaufleitungen ist aber ebenfalls möglich, insbesondere wenn die Topfzeiten sehr kurz sind und die oder eine der Reaktivkomponenten nach einem optionalen Vormischvorgang unmittelbar verarbeitet werden müssen.

In der weiteren, bevorzugten Ausgestaltung der erfindungsgemäßen Vorrichtung werden Torque-motoren mit Polzahlen von 12 bis 128, bevorzugt von 16 bis 64, besonders bevorzugt von 16 bis 32 eingesetzt. Damit ist eine große Variabilität der gewünschten Drehzahlbereiche möglich.

Korrespondierend dazu können die Spindelaggregate im Arbeitshub bevorzugt bei Drehzahlen von 10 bis 730 und besonders bevorzugt von 20 bis 500 Umdrehungen pro Minute arbeiten.

Ferner ist die Drehzahl des Torquemotors bevorzugt auch regulierbar. Dadurch ist sowohl die Ausstoßmenge als auch das Mischungsverhältnis der Reaktivkomponenten zueinander einstellbar.

Eine weitere Ausgestaltung dieser Erfindung besteht darin, dass die Spindel des mindestens einen Dosieraggregats eine bevorzugte Steigung von 4 bis 40 mm und besonders bevorzugt von 6 bis 30 mm hat.

Die Kombination niedriger Spindeldrehzahlen mit niedrigen Spindelsteigungen ermöglicht höchste Stellgenauigkeiten für den Dosierkolbenweg. Das ist wichtig, um einen exakten Funktionsablauf, d.h. exakte Saug- und Druckhübe des Kolbendosieraggregats sicher zu stellen.

Mit dem erfindungsgemäßen Kolbendosieraggregat können Drücke von 5 bis 500 bar, bevorzugt von 50 bis 400 bar, besonders bevorzugt von 100 bis 300 bar erzeugt werden.

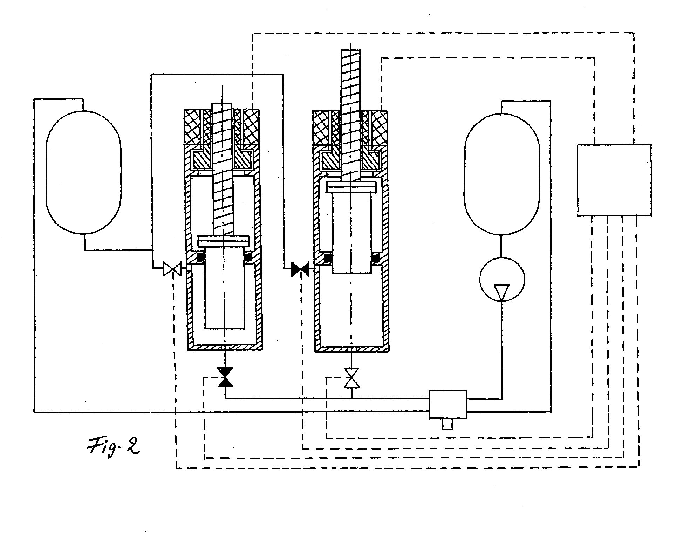

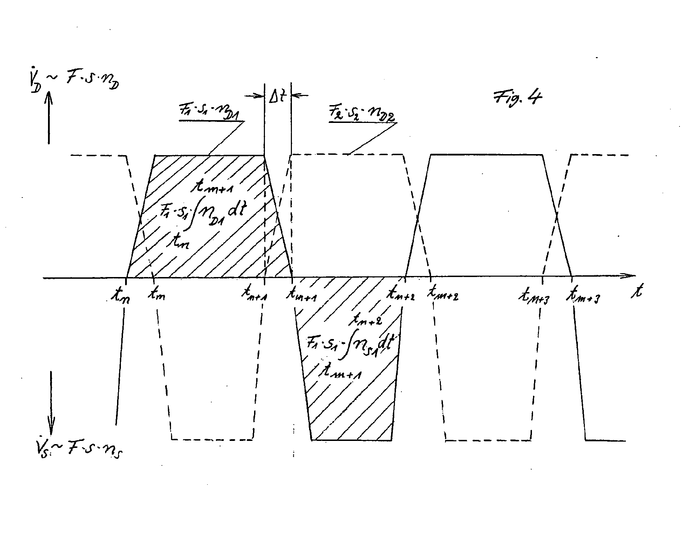

In den Figuren 2, 3 und 4 wird eine besonders interessante Variante der erfindungsgemäßen Vorrichtung dargestellt. Wenn man nämlich einer, d.h. in der Regel der füllstoffhaltigen Reaktivkomponente, zwei solcher Kolbendosieraggregate (jeweils enthaltend einen Dosierkolben und ein dem Dosierkolben zugeordnetes Spindelaggregat, d.h. eine Spindel mit Spindelmutter, wobei diese von eine Torquemotor angetrieben wird) zuordnet, ist es möglich, einen kontinuierlichen Dosierstrom zu erzeugen. Wichtig dabei ist allerdings, die Funktionen dieser beiden Kolbendosieraggregate aufeinander abzustimmen. Dies ist beispielhaft in Figur 4 dargestellt.

In den stationären Phasen ($t_m$ bis $t_{n+1}$ bzw. $t_{m+1}$ bis $t_{n+2}$ usw.) dosiert abwechselnd jeweils nur eines der beiden Kolbendosiergeräte. In den instationären Phasen $\triangle t$ sind beide Kolbendosiergeräte in Funktion.

Damit in den stationären Phasen der beiden Kolbendosiergeräte jeweils der gleiche Dosierstrom vorhanden ist, muss die Bedingung gelten:

$$F_1 \cdot s_1 \cdot n_{D1} = F_2 \cdot s_2 \cdot n_{D2}$$

Das heißt, das Produkt aus Dosierkolbenfläche F, Spindelsteigung s und Spindeldrehzahl $n_D$ muss während des Druckhubs für beide Kolbendosiergeräte gleich groß sein. Sind die Kolbenflächen F und die Spindelsteigungen s für beide Kolbendosiergeräte gleich groß, so vereinfacht sich diese Bedingung zu: $n_{D1} = n_{D2}$.

In den instationären Phasen $\triangle t$ wird die Spindeldrehzahl des zuletzt sich in Funktion befindenden Kolbendosiergeräts von der Betriebsdrehzahl $n_{D1}$ auf Null herunter-gefahren:

$$n_{D1} \to \tilde{n}_{D1} \to 0$$

Zeitgleich wird die Spindeldrehzahl des zugeschalteten Kolbendosiergeräts von Null auf $n_{D2}$ hochgefahren:

$$0 \to \tilde{n}_{D2} \to n_{D2}$$

Für diese instationären Phasen $\Delta t$ gilt die weitere Bedingung:

$$(F_1 \cdot s_1 \cdot \tilde{n}_{D1} + F_2 \cdot s_2 \cdot \tilde{n}_{D2}) = F_1 \cdot s_1 \cdot n_{D1} = F_2 \cdot s_2 \cdot n_{D2}$$

um auch in dieser Phase den gleichen konstanten Dosierstrom zu erhalten.

Auch dieser Term vereinfacht sich, wenn die beiden Dosierkolbenflächen $F_1$ und $F_2$ und die Spindelsteigungen $s_1$ und $s_2$ der beiden Dosieraggregate gleich groß sind:

$$(\tilde{n}_{D1} + \tilde{n}_{D2}) = n_{D1} = n_{D2}$$

Um das einwandfreie Funktionieren eines jeden der beiden Kolbendosiergeräte sicher zu stellen, muss folgende weitere Bedingung eingehalten werden:

$$\left| F_1 \cdot S_1 \int_{t_n}^{t_{m+1}} n_{D1}\, dt \right| = \left| F_1 \cdot S_1 \int_{t_{m+1}}^{t_{m+2}} n_{S1}\, dt \right|$$

$$\left| \int_{t_n}^{t_{m+1}} n_{D1}\, dt \right| = \left| \int_{t_{m+1}}^{t_{n+2}} n_{S1}\, dt \right|$$

Das heißt vereinfacht ausgedrückt:

Das Dosiervolumen, welches im Druckhub ausgedrückt worden ist, muss im anschließenden Saughub komplett wieder ersetzt werden. Dieser formale Zusammenhang zeigt auch, dass die Spindeldrehzahl $n_{s1}$ im Saughub größer sein muss als die Spindeldrehzahl $n_{D1}$ im Druckhub:

$$n_{s1} > n_{D1}.$$

Denn das Zeitintervall $(t_{m+1} - t_n)$ ist größer als das Zeitintervall $(t_{n+2} - t_{m+1})$.

Entsprechendes gilt für Kolbendosiergerät 2

$$n_{s2} > n_{D2}.$$

Die erfindungsgemäße Vorrichtung ist universell, insbesondere jedoch für die Verarbeitung gefüllter Reaktivkomponenten einsetzbar. Beispielhaft seien hier genannt:

- Polyurethan - Reaktivkomponenten,

- Epoxyd-Harz - Reaktivkomponenten,

- Melamin-Harz - Reaktivkomponenten.

Die Erfindung wird anhand der folgenden Abbildungen näher erläutert:

Fig. 1    zeigt schematisch die erfindungsgemäße Vorrichtung als so genanntes "Schussgerät"

Fig. 2    zeigt schematisch die erfindungsgemäße Vorrichtung als "Konti-Gerät" in der stationären Phase: Kolbendosiergerät 1 im Saugbetrieb und Kolbendosier-gerät 2 im Druckbetrieb (siehe auch Figur 4).

Fig. 3    zeigt die gleiche Vorrichtung als "Konti-Gerät" während der instationären Phase $\triangle t$ (siehe auch Figur 4).

Fig. 4    zeigt ein Funktionsdiagramm der erfindungsgemäßen Vorrichtung als "Konti-Gerät", entsprechend den Schemata 2 und 3.

In der Vorrichtung gemäß Figur 1 werden die Reaktivkomponenten von Vorratstanks 1, 2 über Saugleitungen 3, 4 und Druckleitungen 5, 6 mittels Dosieraggregaten 7, 8 zu einem Mischkopf 9 gefördert, von wo sie in den Rezirkulationsphasen über Rücklaufleitungen 10, 11 zu den Vorratstanks 1, 2 zurückgefördert werden. Im "Schussbetrieb" werden die Reaktivkomponenten im Mischkopf 9 in die Mischkammer gefördert und das dort gebildete Reaktivgemisch 12 anschließend in die Form 13 ausgetragen.

Als Dosieraggregate fungieren für die ungefüllte Komponente eine so genannte schnelllaufende Hochdruck-Dosierpumpe 8 und für die gefüllte Komponente ein Kolbendosieraggregat 7. Das Kolbendosieraggregat 7 besteht aus einem Dosierkolben 14, einem Spindelaggregat mit Spindel 15 und Spindelmutter 16 und einem Torquemotor 17 als Antrieb. Der Stator 18 des Torquemotors 17 ist mit dem Gehäuse 20 des Kolbendosieraggregats 7 verbunden. Der Rotor 19 des Torquemotors 17 ist mit der Spindelmutter 16 verbunden. Bei sich drehendem Rotor 19 und drehender Spindelmutter 16 wird die Spindel 15 je nach Drehrichtung nach oben oder nach unten bewegt und damit auch der Dosierkolben 14.

In der dem Kolbendosieraggregat 7 zugeordneten Saugleitung 3 und Druckleitung 5 sind Rückschlagventile 21, 22 angeordnet, um eine eindeutige Strömungsrichtung jeweils im Saug- und Druckbetrieb zu gewährleisten.

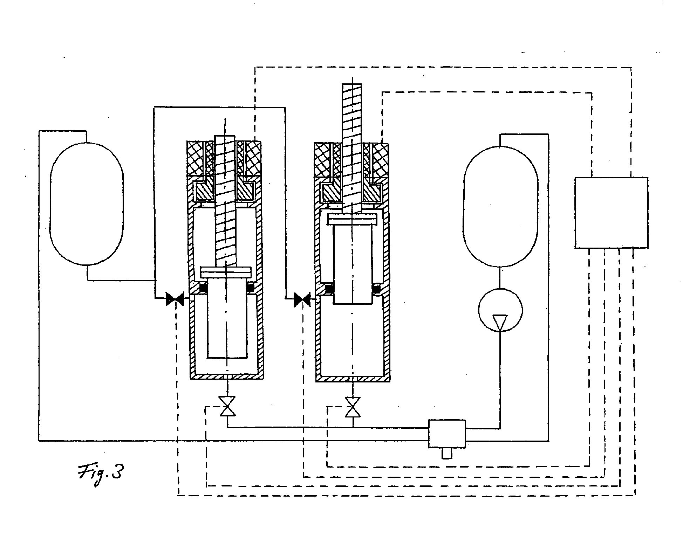

Die Figuren 2 und 3 zeigen jeweils die gleiche Vorrichtung, ein so genanntes Konti-Gerät, jedoch in zwei verschiedenen Betriebszuständen.

Bei dem Konti-Gerät sind der gefüllten Reaktivkomponente zwei Kolbendosieraggregate 7a, 7b zugeordnet, welche wechselweise arbeiten. Lediglich in den Übergangsphasen erzeugen beide Kolbendosieraggregate gemeinsam den Dosierstrom.

Auch bei diesem Gerät werden die Reaktivkomponenten von Vorratstanks 1, 2 über Saugleitungen 3, 4 und Druckleitungen 5, 6 zu einem Mischkopf 9 und in den Rezirkulationsphasen über Rücklaufleitungen 10, 11 zurück zu den Vorratstanks 1, 2 gefördert. Die ungefüllte Komponente wird wiederum durch eine schnell laufende Hochdruck-Dosierpumpe 8 und die gefüllte Komponente durch die beiden Kolbendosieraggregate 7a, 7b für den Konti-Betrieb (kontinuierlichen Betrieb) gefördert.

In Figur 2 ist das erste Kolbendosieraggregat 7a im Saugbetrieb, d.h. das Saugventil 21a ist geöffnet und das Druckventil 22a ist geschlossen. Der Dosierkolben 14a bewegt sich nach oben, so dass die Reaktivkomponente aus dem Vorratstank 1 angesaugt wird. Dabei wird der Dosierkolben 14a über die Spindelmutter 16a und die Spindel 15a durch den Torquemotor 17a angetrieben. Das zweite Kolbendosieraggregat 7b ist im Druckbetrieb und erzeugt den Dosierstrom über den Mischkopf 9, indem der Dosierkolben 14b sich nach unten bewegt. Das Saugventil 21b ist geschlossen und Druckventil 22b ist geöffnet. Der Dosierkolben 14b wird über die Spindelmutter 16b und die Spindel 15b durch den Torquemotor 17b angetrieben.

In Figur 3 ist eine Übergangsphase dargestellt. Beide Kolbendosieraggregate 7a, 7b sind im Druck-, d.h. im Dosierbetrieb. Die Saugventile 21a, 21b beider Kolbendosieraggregate 7a, 7b sind geschlossen und die Druckventile 22a, 22b beider Dosieraggregate 7a, 7b sind geöffnet.

Beim ersten Kolbendosiergerät 7a wird die Spindeldrehzahl abgesenkt und gegen Null gefahren. Beim zweiten Kolbendosiergerät 7b wird die Spindeldrehzahl gesteigert und auf die Betriebsdrehzahl hochgefahren. Kolbenflächen $F_1$ und $F_2$ und Spindelsteigungen $s_1$ und $s_2$ beider Kolbendosiergeräte sind in diesem Beispiel gleich groß gewählt.

Somit entspricht die Summe der beiden Spindeldrehzahlen in diesem instationären Betriebszustand der Betriebsdrehzahl der Spindeln im stationären Betriebszustand während des Druckbetriebs.

Die Steuerung für die Vorrichtung ist vereinfacht dargestellt. Lediglich für die beiden Kolbendosieraggregate 7a, 7b sind die erforderlichen Impulsleitungen gezeigt. Von dem Steuergerät 23 gehen Impulsleitungen 24a, 24b zu den Saugventilen 21a, 21b, und Impulsleitungen 25a, 25b und zu den Druckventilen 22a, 22b, um in die jeweiligen Betriebszustände Saugen, Drücken sowie den Übergangsphasen umsteuern zu können. Des Weiteren führen von dem Steuergerät 23 Impulsleitungen 26a, 26b zu den beiden Torque-Motoren 17a, 17b. Hiermit werden die erforderlichen Spindeldrehzahlen gesteuert und jeweils vorab auch die Drehrichtung definiert. Von dem Steuergerät 23 werden auch die erforderlichen Zeitfunktionen vorgegeben. Diese sind in Figur 4 im Detail dargestellt.

Figur 4 zeigt für das in Figur 2 und Figur 3 beschriebene Konti-Gerät das Diagramm der Dosierströme $\dot{V}_D$ als Funktion der Zeit t sowie die Saugströme $\dot{V}_S$ ebenfalls als Funktion der Zeit t.

Die durchgezogenen Linien zeigen die Dosier- sowie Saugströme des ersten Kolbendosieraggregats 7a und die gestrichelten Linien entsprechend die des zweiten Kolbendosieraggregats 7b.

In der stationären Zeitphase $t_m$ bis $t_{n+1}$ wird der Dosierstrom $V_D$ vom ersten Kolbendosieraggregat 7a erzeugt. In der stationären Zeitphase $t_{m+1}$ bis $t_{n+2}$ wird der Dosierstrom $V_D$ vom zweiten Kolbendosieraggregat 7b erzeugt.

In der Übergangsphase $\Delta t$ (= $t_{m+1}$ - $t_{n+1}$) wirken beide Kolbendosieraggregate zusammen und erzeugen gemeinsam den Dosierstrom $\dot{V}_D$. Das ist möglich, wenn die Absenkung der Spindeldrehzahl vom ersten Kolbendosieraggregat 7a genauso, groß ist wie der Anstieg der Spindeldrehzahl vom zweiten Kolbendosieraggregat 7b.

Dadurch, dass dieses wechselweise Wirken der beiden Kolbendosieraggregate 7a, 7b stetig fortgeführt wird, entsteht ein kontinuierlicher Dosierstrom $\dot{V}_D$.

Das Diagramm in Figur 4 zeigt auch die erforderlichen Saugfunktionen, denn das jeweils nicht in Dosierfunktion sich befindende Kolbendosieraggregat muss in der Zwischenzeit komplett wieder aufgefüllt werden. Da die Saugphasen kürzer sind als die Dosierphasen, sind dementsprechend in der Saugphase höhere Spindeldrehzahlen erforderlich.

**Patentansprüche**

1. Vorrichtung zur Herstellung von Formteilen aus Reaktivkunststoffen umfassend Vorratsbehälter (1, 2) für die Reaktivkomponenten, einen Mischer (9) für die Vermischung der Reaktivkomponenten, Dosieraggregate (7, 8) und Leitungen (5, 6) für die Dosierung der Reaktivkomponenten aus den Vorratsbehältern (1, 2) in den Mischer (9), **dadurch gekennzeichnet, dass** mindestens eines der Dosieraggregate ein Kolbendosieraggregat (7) ist, welches einen Dosierkolben (14) und ein dem Dosierkolben zugeordnetes Spindelaggregat mit einer Spindel (15) und einer Spindelmutter (16) enthält, wobei die Spindelmutter von einem Torquemotor (17) angetrieben wird.

2. Vorrichtung nach Anspruch 1, **dadurch gekennzeichnet, dass** zwischen Mischer (9) und Vorratstanks (1, 2) Rücklaufleitungen (10, 11) angeordnet sind, über welche die Reaktivkomponenten rezirkulieren können.

3. Vorrichtung nach Anspruch 1 oder 2, **dadurch gekennzeichnet, dass** der Torque-Motor Polzahlen von 12 bis 128, bevorzugt von 16 bis 64, besonders bevorzugt von 16 bis 32 hat.

4. Vorrichtung nach einem der Ansprüche 1 bis 3, **dadurch gekennzeichnet, dass** das Spindelaggregat bei Drehzahlen von 10 min⁻¹ bis 730 min⁻¹, bevorzugt von 20 min⁻¹ bis 500 min⁻¹, arbeiten kann.

5. Vorrichtung nach einem der Ansprüche 1 bis 4, **dadurch gekennzeichnet, dass** die Drehzahl des Torquemotors regulierbar ist.

6. Vorrichtung nach einem der Ansprüche 1 bis 5, **dadurch gekennzeichnet, dass** die Spindel 15 des mindestens einen Kolbendosieraggregats (7) eine Steigung von 4 bis 40 mm und bevorzugt von 6 mm bis 30mm hat.

7. Vorrichtung nach einem der Ansprüche 1 bis 6, **dadurch gekennzeichnet, dass** das mindestens eine Kolbendosieraggregat (7) Drücke von 5 bis 500 bar, bevorzugt von 50 bis 400 bar, besonders bevorzugt von 100 bis 300 bar erzeugen kann.

8. Vorrichtung nach einem der Ansprüche 1 bis 7, **dadurch gekennzeichnet, dass** mindestens einer der Reaktivkomponenten zwei Dosierkolbenaggregate (7a, 7b) zugeordnet sind, welche jeweils einen Dosierkolben (14a, 14b) und jeweils ein dem Dosierkolben zugeordnetes Spindelaggregat mit einer Spindel (15a, 15b) und einer Spindelmutter (16a, 16b) enthalten, wobei die Spindelmuttern (16a, 16b) von einem Torquemotor (17a, 17b) angetrieben werden.

9. Verfahren zur Herstellung von Formteilen aus Reaktivkunststoffen in der Vorrichtung nach einem der Ansprüche 1 bis 8, bei dem die Reaktivkomponenten in den Mischer dosiert und dort zu einem Reaktivgemisch vermischt werden, und das Reaktivgemisch anschließend aus dem Mischer in eine Form oder auf ein Substrat ausgetragen wird und dort aushärtet.

10. Verfahren zur Herstellung von Formteilen aus Reaktivkunststoffen in der Vorrichtung nach Anspruch 8, bei dem die Reaktivkomponenten in den Mischer dosiert und dort zu einem Reaktivgemisch vermischt werden, und das Reaktivgemisch anschließend aus dem Mischer in eine Form oder auf ein Substrat ausgetragen wird und dort aushärtet, wobei die beiden Kolbendosieraggregate so betrieben werden, dass ein kontinuierlicher Strom an Reaktivgemisch aus dem Mischer ausgetragen wird, indem das Produkt aus Dosierkolbenfläche, Spindelsteigung und Spindeldrehzahl des ersten Kolbendosieraggregats im Druckhub genauso groß gewählt wird wie das Produkt aus Dosierkolbenfläche, Spindelsteigung und Spindeldrehzahl des zweiten Kolbendosieraggregats im Druckhub, und indem die Summe der Produkte aus Dosierkolbenfläche, Spindelsteigung und Spindeldrehzahl für die beiden Kolbendosieraggregate in den jeweiligen instationären Phasen genauso groß gewählt wird wie die Summe der Produkte aus Dosierkolbenfläche, Spindelsteigung und Spindeldrehzahl für die beiden Kolbendosieraggregate in den jeweiligen stationären Phasen.

11. Verfahren nach Anspruch 10, **dadurch gekennzeichnet, dass** für jedes der beiden Kolbendosieraggregate das Integral über der Drehzahl als Funktion der Zeit im Zeitintervall während eines Druckhubs genauso groß gewählt wird wie das Integral über der Drehzahl als Funktion der Zeit im Zeitintervall während des jeweils korrespondierenden Saughubs.

12. Verfahren nach einem der Ansprüche 9 bis 11, bei dem als Reaktivkomponenten wenigstens eine Isocyanatkomponente und wenigstens eine Polyolkomponente zur Herstellung von Polyurethan-Formteilen eingesetzt werden.

13. Verfahren nach einem der Ansprüche 9 bis 11, bei dem Formteile aus Epoxy-Harz hergestellt werden.

14. Verfahren nach einem der Ansprüche 9 bis 11, bei dem Formteile aus Melamin-Harz hergestellt werden.

**Geänderte Patentansprüche gemäss Regel 86(2) EPÜ.**

1. Verfahren zur Herstellung von Formteilen aus Reaktivkunststoffen in einer Vorrichtung,
bei dem die Vorrichtung Vorratsbehälter (1, 2) für die Reaktivkomponenten, einen Mischer (9) für die Vermischung der Reaktivkomponenten, Dosieraggregate und Leitungen für die Dosierung der Reaktivkomponenten aus den Vorratsbehältern in den Mischer umfasst und
bei dem mindestens einer der Reaktivkomponenten zwei Dosierkolbenaggregate (7a, 7b) zugeordnet sind, welche jeweils einen Dosierkolben (14a, 14b) und jeweils ein dem Dosierkolben zugeordnetes Spindelaggregat mit einer Spindel (15a, 15b) und einer Spindelmutter (16a, 16b) enthalten, wobei die Spindelmuttern (16a, 16b) von einem Torquemotor (17a, 17b) angetrieben werden, und

bei dem die Reaktivkomponenten in den Mischer dosiert und dort zu einem Reaktivgemisch vermischt werden, und das Reaktivgemisch anschließend aus dem Mischer in eine Form oder auf ein Substrat ausgetragen wird und dort aushärtet, wobei die beiden Kolbendosieraggregate so betrieben werden, dass ein kontinuierlicher Strom an Reaktivgemisch aus dem Mischer ausgetragen wird, indem das Produkt aus Dosierkolbenfläche, Spindelsteigung und Spindeldrehzahl des ersten Kolbendosieraggregats im Druckhub genauso groß gewählt wird wie das Produkt aus Dosierkolbenfläche, Spindelsteigung und Spindeldrehzahl des zweiten Kolbendosieraggregats im Druckhub, und indem die Summe der Produkte aus Dosierkolbenfläche, Spindelsteigung und Spindeldrehzahl für die beiden Kolbendosieraggregate in den jeweiligen instationären Phasen genauso groß gewählt wird wie die Summe der Produkte aus Dosierkolbenfläche, Spindelsteigung und Spindeldrehzahl für die beiden Kolbendosieraggregate in den jeweiligen stationären Phasen.

**2.** Verfahren nach Anspruch 1, bei dem für jedes der beiden Kolbendosieraggregate das Integral über der Drehzahl als Funktion der Zeit im Zeitintervall während eines Druckhubs genauso groß gewählt wird wie das Integral über der Drehzahl als Funktion der Zeit im Zeitintervall während des jeweils korrespondierenden Saughubs.

**3.** Verfahren nach einem der Ansprüche 1 oder 2, bei dem als Reaktivkomponenten wenigstens eine Isocyanatkomponente und wenigstens eine Polyolkomponente zur Herstellung von Polyurethan-Formteilen eingesetzt werden.

**4.** Verfahren nach einem der Ansprüche 1 bis 3, bei dem Formteile aus Epoxy-Harz hergestellt werden.

**5.** Verfahren nach einem der Ansprüche 1 bis 3, bei dem Formteile aus Melamin-Harz hergestellt werden.

Fig. 1

Fig. 2

Fig.3

Fig. 4

**Europäisches Patentamt**

## EUROPÄISCHER RECHERCHENBERICHT

Nummer der Anmeldung

EP 06 00 4518

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 407 872 A (GALBUSERA, PIETRO; GALBUSERA, RUGGERO) 14. April 2004 (2004-04-14) * Absatz [0038]; Anspruch 1 * ----- | 1,5,7,9 | INV. B29B7/76 B01F15/04 B29C67/24 |
| Y | FR 2 597 025 A (SKM SA) 16. Oktober 1987 (1987-10-16) * Seite 6, Zeile 12 - Zeile 16; Anspruch 4; Abbildung 4 * ----- | 1,5,7,9 | |
| Y | KRAUSE W ET AL: "ANTRIEBSSYSTEME FUER AUTOMATEN DER KLEINTEILMONTAGE" TECHNISCHE RUNDSCHAU, EDITION COLIBRI AG., WABERN, CH, Bd. 89, Nr. 14, 4. April 1997 (1997-04-04), Seiten 26-30, XP000659713 ISSN: 1023-0823 * Abbildungen 1-4 * ----- | 1,5,7,9 | |
| Y | US 4 224 821 A (TAYLOR ET AL) 30. September 1980 (1980-09-30) * Abbildung 1 * ----- | 1,5,7,9 | RECHERCHIERTE SACHGEBIETE (IPC) B01F B29B B29C G01F G05D H02K |
| A | WO 99/07462 A (LENHARDT MASCHINENBAU GMBH; LENHARDT, KARL) 18. Februar 1999 (1999-02-18) * Seite 8, Absatz 4; Anspruch 1; Abbildungen 1,2 * ----- | 1,7 | |
| A | EP 0 719 623 A (DOW CORNING CORPORATION) 3. Juli 1996 (1996-07-03) * Spalte 8, Absatz 2 * ----- | 1,9 | |
| A | US 5 388 761 A (LANGEMAN ET AL) 14. Februar 1995 (1995-02-14) * Spalte 7, Zeile 55 - Spalte 8, Zeile 58; Abbildung 4 * ----- | 1,9 | |

-/--

Der vorliegende Recherchenbericht wurde für alle Patentansprüche erstellt

| Recherchenort | Abschlußdatum der Recherche | Prüfer |
|---|---|---|
| Den Haag | 13. April 2006 | Van Nieuwenhuize, O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................................

& : Mitglied der gleichen Patentfamilie, übereinstimmendes Dokument

EPO FORM 1503 03.82 (P04C03)

**Europäisches Patentamt**

## EUROPÄISCHER RECHERCHENBERICHT

Nummer der Anmeldung

EP 06 00 4518

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2004/073848 A (ASM-DIMATEC INGENIERIA, S.A; MOYA GARCIA, JOSE, JULIO) 2. September 2004 (2004-09-02) * Zusammenfassung * ----- | 10 | |
| A | US 4 494 677 A (FALCOFF ET AL) 22. Januar 1985 (1985-01-22) * Abbildung 1 * ----- | 1 | |
| P,A | DE 103 54 441 A1 (MIKSCH GMBH) 23. Juni 2005 (2005-06-23) * Abbildung 1 * ----- | 1 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 13. April 2006 | Van Nieuwenhuize, O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes Dokument

EPO FORM 1503 03.82 (P04C03)

**EP 1 702 737 A1**

| Im Recherchenbericht angeführtes Patentdokument | | Datum der Veröffentlichung | Mitglied(er) der Patentfamilie | | Datum der Veröffentlichung |
|---|---|---|---|---|---|
| EP 1407872 | A | 14-04-2004 | KEINE | | |
| FR 2597025 | A | 16-10-1987 | KEINE | | |
| US 4224821 | A | 30-09-1980 | KEINE | | |
| WO 9907462 | A | 18-02-1999 | AT | 224764 T | 15-10-2002 |
| | | | DE | 19834444 A1 | 01-04-1999 |
| | | | EP | 1001842 A1 | 24-05-2000 |
| | | | JP | 2001513421 T | 04-09-2001 |
| | | | US | 6234355 B1 | 22-05-2001 |
| EP 0719623 | A | 03-07-1996 | DE | 69515976 D1 | 04-05-2000 |
| | | | DE | 69515976 T2 | 09-11-2000 |
| | | | JP | 8243470 A | 24-09-1996 |
| | | | US | 5547000 A | 20-08-1996 |
| US 5388761 | A | 14-02-1995 | CA | 2107523 A1 | 02-04-1995 |
| WO 2004073848 | A | 02-09-2004 | AU | 2003294044 A1 | 09-09-2004 |
| | | | BR | 0309320 A | 22-02-2005 |
| | | | ES | 2214134 A1 | 01-09-2004 |
| US 4494677 | A | 22-01-1985 | BE | 898292 A1 | 23-05-1984 |
| | | | CA | 1220263 A1 | 07-04-1987 |
| DE 10354441 | A1 | 23-06-2005 | KEINE | | |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0003563 A